# EUROPEAN PATENT APPLICATION

(11) **EP 4 729 342 A1**
(43) Date of publication of application: **22.04.2026**
(21) Application number: 24823614.3
(22) Date of filing: 31.05.2024
(51) Int. Cl.: B60L 53/30, B60L 55/00

(54) **COMMUNICATION METHOD FOR VALUE ADDED SERVICE BASED ON SUPPORTED PROVIDERS LIST AND APPARATUS USING SAME**

(30) Priority: 15.06.2023 KR 20230077042
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: SEONG, Jae Yong, Hwaseong-si, Gyeonggi-do 18280 (KR); SHIN, Min Ho, Yongin-si, Gyeonggi-do 17058 (KR)
(74) Representative: Viering, Jentschura & Partner mbB Patent- und Rechtsanwälte
(86) International application number: PCT/KR2024/007458
(87) International publication number: WO 2024/258094

(57) **Abstract**

The present invention provides a communication method for constructing a new VAS environment so that a legacy charger supporting a charging service in V2G communication may provide an EV with a supported providers list (SPL), and an apparatus using same. The communication method by an SECC comprises the steps of: receiving, from an EV, a request message for a service list of a charging service; providing the EV with the service list comprising a first service identifier of a dedicated VAS for providing an SPL for an EMSP; receiving, from the EV, a request message for parameters of the dedicated VAS; and providing the EV with at least one service parameter set for the SPL supporting the dedicated VAS.

## Description

### [Technical Field]

The present disclosure relates to a vehicle-to-grid (V2G) communication technology between a vehicle and a grid, and more particularly, to a communication method for establishing an environment for a new value-added service (VAS) that allows a legacy charger providing a charging service to a road vehicle such as an electric vehicle (EV) in V2G communication to provide a supported providers list (SPL) to the EV, and to a device using the same.

### [Background Art]

A message sequence between a grid and an electric vehicle (EV) is predefined between a charger management device or a supply equipment communication controller (SECC) of a charge point operator (CPO) located on the grid side, which corresponds to the power grid, and an electric vehicle communication controller (EVCC) mounted in the EV, and is performed in the form of exchanging a pair of request and response messages between the two.

A high-voltage battery mounted in the EV is typically charged using either alternating current (AC) charging or direct current (DC) charging, or by using a charging method based on an automatic connection device (ACD) or wireless power transfer (WPT).

Meanwhile, in some existing chargers, the SECC that controls EV charging supports a function called a supported provider list (SPL). The SPL supports the EV in checking a list of AuthorizationSetupRes messages of e-mobility service providers (eMSPs), and also enables the EV to verify compatibility between the charger and park and charge (PnC) or plug and charge, and to select an appropriate contract certificate issued by a preferred eMSP.

However, many existing chargers do not yet support the SPL function, and a method for activating the SPL function in legacy chargers that do not support such an SPL function is being demanded.

### [Disclosure]

### [Technical Problem]

The present disclosure has been devised to meet the above-described demands of the conventional technology, and an object of the present disclosure is to provide a communication method and a device using the communication method for a dedicated value-added service (VAS) that provides a supported providers list (SPL) to an electric vehicle (EV) from a legacy charger, which does not support the SPL function, such as a device related to EV charging defined in the ISO 15118-2 document, while maintaining interoperability of the legacy charger.

Another object of the present disclosure is to provide a communication method and a device using the communication method for a dedicated VAS that provides SPL information while maintaining interoperability with existing legacy chargers.

### [Technical Solution]

A communication method for a value-added service (VAS) by a supply equipment communication controller (SECC) in V2G (vehicle-to-grid) communication, the communication method comprises: receiving, from an electric vehicle (EV), a request message for a service list of a charging service; providing, to the EV, a service list comprising a first service identifier of a dedicated VAS for providing a supported providers list for an e-mobility service provider (EMSP); receiving, from the EV, a request message for parameters of the dedicated VAS; and providing, to the EV, at least one service parameter set for the supported providers list supporting the dedicated VAS.

The providing of the service list comprising the first service identifier to the EV may comprise transmitting a service discovery response message to the EV.

The receiving of the request message for parameters of the dedicated VAS from the EV may comprise receiving a service detail request message from the EV.

The providing of the at least one service parameter set to the EV may comprise transmitting a service detail response message to the EV in response to the service detail request message.

The service discovery response message may comprise service elements comprising the first service identifier, a service name representing the supported providers list, and a service category representing information of electric vehicle supply equipment (EVSE).

The service discovery response message may further comprise a service element indicating whether the service is free.

The at least one service parameter set may comprise a string value of provider identifiers set as a parameter name of "providers", the provider identifiers being separated by commas.

Each of the provider identifiers comprises a country code and a provider ID from a mobility authentication identifier (EMAID).

The supported providers list may comprise a list of providers that support PnC (plug and charge / park and charge) authorization.

The communication method may further comprise generating a single service parameter set listing all providers in the supported providers list, or generating multiple service parameter sets classifying and listing all providers in the supported providers list based on a predefined criterion.

The communication method may further comprise receiving, from the EV via a payment details request message, a contract certificate chain having a mobility authentication identifier (EMAID) supported by the supported providers list.

A device for a value-added service (VAS) in V2G (vehicle-to-grid) communication, comprises a processor and at least one instruction in the processor. The processor is configured to: receive, from an electric vehicle (EV), a request message for a service list of a charging service; provide, to the EV, a service list comprising a first service identifier of a dedicated VAS for providing a supported providers list for an e-mobility service provider (EMSP); receive, from the EV, a request message for parameters of the dedicated VAS; and provide, to the EV, at least one service parameter set for the supported providers list supporting the dedicated VAS.

The processor may further be configured to generate a single service parameter set listing all providers in the supported providers list, or generate multiple service parameter sets classifying and listing all providers in the supported providers list based on a predefined criterion.

The processor may further be configured to receive, from the EV via a payment details request message, a contract certificate chain having a mobility authentication identifier (EMAID) supported by the supported providers list.

A communication method for a value-added service (VAS) by an electric vehicle communication controller (EVCC) in V2G (vehicle-to-grid) communication, the communication method comprises: requesting, to a supply equipment communication controller (SECC), a service list of an EV charging service; receiving, from the SECC, a service list comprising a first service identifier of a dedicated VAS for providing a supported providers list for an e-mobility service provider (EMSP); requesting, to the SECC, parameters of the dedicated VAS; and receiving, from the SECC, at least one service parameter set for the supported providers list supporting the dedicated VAS.

The receiving of the service list comprising the first service identifier may comprise receiving a service discovery response message from the SECC.

The requesting of the parameters of the dedicated VAS may comprise transmitting a service detail request message to the SECC.

The receiving of the at least one service parameter set may comprise receiving a service detail response message from the SECC in response to the service detail request message.

The service discovery response message may comprise service elements comprising the first service identifier, a service name representing the supported providers list, and a service category representing information of electric vehicle supply equipment (EVSE).

The service discovery response message may further comprise a service element indicating that the service is free.

At least one of the at least one service parameter set comprises a string value of provider identifiers set as a parameter name of providers.

The provider identifiers may be separated by commas.

Each of the provider identifiers may comprise a country code and a provider ID from the first five characters of a mobility authentication identifier (EMAID).

The communication method may further comprise transmitting, to the SECC via a payment details request message, a contract certificate chain having a mobility authentication identifier (EMAID) supported by the supported providers list.

### [Advantageous Effects]

According to the present disclosure, a supported providers list (SPL) for a value-added service (VAS) may be provided to a legacy device such as an existing electric vehicle (EV) charger, while maintaining the interoperability of the legacy device without modifying the schema or requirements of the legacy device. Accordingly, the legacy device may be supported to provide various value-added services to the EV during EV charging.

In addition, according to the present disclosure, it is possible to implement a service that is exclusively used for providing a supported providers list (SPL) comprising information on available providers, as a value-added service (VAS) defined by standards such as ISO 15118-2.

Further, according to the present disclosure, a value-added service or VAS may be effectively implemented without modification of the legacy device by utilizing the service parameter elements of a ServiceDetailRes message.

Furthermore, according to the present disclosure, it may not be required to perform additional VAS communication that must subsequently be executed. In this case, the EV may not be required to select the value-added service in the service selection process, thereby ensuring user selectivity or user convenience.

### [Description of Drawings]

FIG. 1 is an example diagram for explaining an electric vehicle charging method to which a communication method according to the present disclosure may be applied.
FIG. 2 is another example diagram for explaining an electric vehicle charging method to which a communication method according to the present disclosure may be applied.
FIG. 3 is a schematic block diagram for explaining a communication relationship among an electric vehicle communication controller (EVCC), a supply equipment communication controller (SECC), and a secondary actor (SA), to which a communication method according to the present disclosure may be applied.
FIG. 4 is a flowchart for explaining detailed procedures of a communication method for a supported providers list-based value-added service according to exemplary embodiments of the present disclosure.
FIG. 5 is an example diagram of a configuration of a provider list that may be applied to the communication method of FIG. 4.
FIG. 6 is a diagram illustrating a configuration of a mobility authentication identifier for explaining a configuration of each provider identifier within the provider list of FIG. 5.
FIG. 7 is a flowchart for explaining a communication method according to other exemplary embodiments of the present disclosure.
FIG. 8 is an example diagram for explaining detailed items of a service list within a message for implementing a value-added service applicable to the communication method of FIG. 7.
FIG. 9 is an example diagram for explaining the interoperability effect according to the communication method of FIG. 7.
FIG. 10 is a schematic block diagram showing a generalized hardware configuration of a device for providing a supported providers list (SPL) for a value-added service (VAS) according to other exemplary embodiments of the present disclosure.

### [Best mode of the Invention]

For a clearer understanding of the features and advantages of the present disclosure, exemplary embodiments of the present disclosure will be described in detail with reference to the accompanying drawings. However, it should be understood that the present disclosure is not limited to particular embodiments disclosed herein but comprises all modifications, equivalents, and alternatives falling within the spirit and scope of the present disclosure. In the drawings, similar or corresponding components may be designated by the same or similar reference numerals.

The terminologies comprising ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may comprise a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms comprise plural referents as well unless the context clearly dictates otherwise. Also, the expressions "comprises," "comprises," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, comprising technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Smart grid": A system implemented in which power plants, power generation units, and energy storage systems are connected in an intelligent manner through network facilities so as to exchange messages based on information and communication technologies.

"Charging Station": A facility comprising one or more EVSEs, smart meters, and other technical equipment required to charge an EV.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator. The EV may comprise an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc. "Plug-in Electric Vehicle (PEV)": An Electric Vehicle that recharges the on-vehicle primary battery by connecting to the power grid.

"Electric Vehicle Supply Equipment (EVSE)": A device forming a part of the charging station that supplies energy to the electric vehicle via an outlet and being connected to a smart meter to measure an amount of transferred energy.

"Wireless power charging system (WCS)": A system for wireless power transfer and control of interactions comprising operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and comprise a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (comprising the PEV, or PHEV) communicate with power grid to optimize charging ratio or discharging ratio of EV by reflecting capacity of the power grid or expense of use.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupling": A magnetic coupling between two coils. One of the two coils may refer to a primary coil or GA coil, and the other one of the two coils may refer to a secondary coil or vehicle assembly VA coil.

"OEM (original equipment manufacturer)": A server operated by the electric vehicle manufacturer, and may be a root certificate authority (CA) that issues OEM root certificates.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Charge Service Provider (CSP)": An entity responsible for managing and authenticating EV user credentials, billing, and providing other value-added services to customers, and may be considered a specific type of Mobility Operator (MO) and may also be implemented as an integrated entity with an MO.

"Clearing House (CH)": An entity that handles cooperation among MOs, Charging Service Providers (CSPs), and Charging Station Operators (CSOs), and in particular, may serve as an intermediary that facilitates authorization, billing, and settlement procedures related to EV charging service roaming between two settlement parties.

"Roaming": A scheme and the associated exchange of information and provisions that allow EV users to access charging services provided by multiple CSPs or CSOs across different mobility networks using a single credential and contractual agreement.

"Credential": A physical or digital asset representing the personal identity of an EV or its owner, and may comprise cryptographic information used to verify identity, such as passwords, public/private key pairs used in public-key cryptographic algorithms, public key certificates issued by a certification authority, and information related to a trusted root certification authority.

"Certificate": An electronic document that binds a public key to an identity through a digital signature.

"Service Session": A set of EV charging services at a charging point, assigned to a customer within a defined timeframe and identified by a unique identifier.

Mobility Operator (MO)": A legal entity establishing a contractual relationship with an end user or a business entity as a legal basis for an authorization and a payment for the charging at the charging station. MO may refer to E-Mobility Provider (EMP), E-Mobility Service Provider (EMSP).

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver may authenticate and authorize himself or herself for a charging session at the charging station. Examples comprise a cash payment, a prepaid card, a credit card, a debit card, an NFC, a RFID, and an SMS. The EIM may form two typical authentication modes together with the PnC.

"Sales tariff": A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may comprise not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may comprise a charge point operator (CPO) and the mobility operator (MO).

"E-Mobility Account Identifier (EMAID)": A single contractual certificate issued for each legal contract concluded between the mobility operator and a customer for the electric vehicle charging. "E-Mobility Account Identifier (EMAID)" may refer to a unique contract certificate issued for each legal agreement concluded between a mobility operator and a customer for electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and may be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may comprise digital, IP-based protocols. The communications between the EV and the EVSE and the communications between the EVCC and the SECC may be comprised in the V2G communication interface specified in the ISO 15118 standard.

The V2G communication interface and the ISO 15118 standard may be intended to activate a user-friendly mechanism to perform the authentication, authorization, and payment without requiring additional user interaction at the charging station.

Electric vehicles may be integrated into the smart grid to provide a flexible load control and valuable grid services without compromising driver habits. In order to avoid the need for additional grid components to supply power to peak power demands arising from highly variable load fluctuations, the energy of the electric vehicles may be considered as one of the energy sources in the smart grid. In addition, it may be considered to provide appropriate incentives to electric vehicles for the expansion of the smart grid, so that the smart grid may encourage the generation and use of the renewable energy in the long term.

A Vehicle-to-Grid Transfer Protocol (V2GTP) of the OSI 5 layer may be basically understood as a session wrapper for application layer messages. The application layer messages at this time may be referred to as so-called V2G messages. The V2GTP may comprise definitions on a header and a payload to enable an efficient classification and processing of the V2G messages.

In an electric vehicle charging system for implementing the present disclosure, an electric vehicle (EV) may be connected to a charging station via a wired or wireless link to receive energy from the charging station, and may charge an energy storage device, such as a battery, with the received energy.

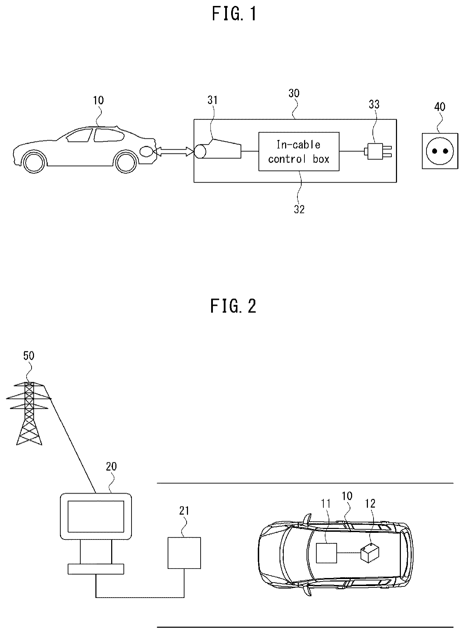

FIG. 1 is an example diagram illustrating an electric vehicle charging method to which the communication method according to the present disclosure may be applied. FIG. 2 is another example diagram illustrating an electric vehicle charging method to which the communication method according to the present disclosure may be applied. That is, FIG. 1 and FIG. 2 respectively show methods of charging an electric vehicle using wired and wireless connections.

FIG. 1 is a conceptual diagram illustrating a wired charging method for an electric vehicle to which the communication method of the present disclosure may be applied.

As shown in FIG. 1, the wired charging of an electric vehicle may be performed by connecting an electric vehicle 10, hereinafter referred to as 'EV', to a power supply circuit of a charging station via a charging cable 30, for example, by connecting a connector 31 at one end of a cable of a charging station (see reference numeral 20 in FIG. 2) to an inlet of the EV 10.

Here, the EV 10 can be defined as an automobile that receives electric power, supplied from a rechargeable energy storage device such as a battery, as an energy source for a power unit such as an electric motor. The EV 10 may be a hybrid automobile equipped with both an electric motor and a conventional internal combustion engine.

The above-described EV 10 may be replaced with any form of mobility such as a motorcycle, cart, scooter, electric bicycle, or the like, in addition to an automobile. However, for convenience of explanation, this specification will be described focusing on the EV.

The EV 10 may comprise an inlet, a plug connector, a receptacle, or the like that may be connected to the connector 31 of the charging cable 30. The inlet provided in the EV 10 may support slow charging or fast charging. In this case, the EV 10 may support both slow charging and fast charging through a single inlet, or may comprise a plurality of inlets that respectively support slow charging and fast charging.

The EV 10 of the present exemplary embodiments may comprise an on-board charger (OBC) in order to support slow charging or charging via alternating current (AC) power supplied from a general power grid. The on-board charger may boost the AC power supplied from an external wired source during slow charging and convert the boosted AC power into direct current (DC) power to be supplied to a battery built into the EV 10. Meanwhile, when DC power for fast charging is supplied to the inlet, the DC power may be supplied directly to the battery without passing through the on-board charger, thereby charging the battery.

Meanwhile, the EV charging cable 30 may be configured to comprise a charging connector 31, a socket-outlet connection portion 33, and an in-cable control box (ICCB) 32. In this case, the charging connector 31 may be a coupler capable of being electrically connected to the EV 10, and the in-cable control box 32 may communicate with the EV 10 to receive state information of the EV or control power charging to the EV 10. The in-cable control box 32 is illustrated as being comprised in the EV charging cable 10, but may be connected to a power supply circuit (not shown) supplying power to the EV 10 at a location other than the EV charging cable 10, for example, at the charging station, or may be disposed inside the power supply circuit. The socket-outlet connection portion 33 may be an electrical connection mechanism such as a plug or connector, and may be coupled to a socket-outlet 40 of the charging station.

Meanwhile, the socket-outlet 40 may refer to a connection point between a power supply device or charger of the charging station and the EV charging cable 30. The socket-outlet 40 may also refer to a connection point between a charger installed at another location and the EV charging cable 30. For example, the socket-outlet 40 may be installed in charging facilities such as a parking lot attached to the home of the EV 10 owner, a parking space at a gas station designated for EV charging, or a parking space at a shopping center or workplace, in addition to commercial specialized charging station facilities.

FIG. 2 is a conceptual diagram illustrating a wireless power transfer method for an electric vehicle to which the communication method of the present disclosure may be applied.

As shown in FIG. 2, wireless power transfer (WPT) for an EV may be defined as delivering electrical energy from a supplier-side device to a consumer-side device through a magnetic field in a magnetic resonance state without a current flow via a galvanic connection from a supply network. The wireless power transfer may be utilized to transmit power from a charging station 10 to the EV 10 to charge the EV 10.

The wireless power transfer may be performed by at least one component of the EV 10 or the charging station 20 in order to wirelessly transmit power to the EV 10.

The EV 10 may comprise a receiving pad 11 having a receiving coil for receiving magnetic energy wirelessly from the charging station 20. The receiving coil in the receiving pad 11 receives magnetic energy from a transmitting coil in a transmitting pad 21 of the charging station 20, for example, by magnetic resonance. The magnetic energy received in the EV 10 is converted into an induced current, and the induced current is rectified into a direct current, thereby charging a battery 12.

The charging station 20 receives power from a commercial power grid 50 or a power backbone and may supply energy to the EV 10 through the transmitting pad 21. The transmitting pad 21 comprises a transmitting coil. The transmitting coil in the transmitting pad 21 generates magnetic flux and supplies magnetic energy amplified by magnetic resonance to the EV 10. The charging station 20 may be located in various places, for example, a parking lot attached to the home of the EV 10 owner, a parking space for EV charging at a gas station, a parking area at a shopping center, or a parking area at an office building.

The charging station 20 may communicate with a power infrastructure management system or an infrastructure server that manages the power grid 50 via wired or wireless communication. In addition, the charging station 20 may also perform wireless communication with the EV 10. Here, the wireless communication may comprise a wireless local area network (WLAN) based on WiFi in accordance with the IEEE 802.11 standard, and may further comprise peer-to-peer signal (P2PS) communication using a low-frequency (LF) magnetic field signal and/or a low power excitation (LPE) signal. Furthermore, the wireless communication between the charging station 20 and the EV 10 may comprise one or more of various communication methods such as Bluetooth, Zigbee, and cellular.

Meanwhile, according to the electric vehicle charging communication standard document ISO 15118, the EV and the EV charging station exchange messages to control the overall charging process. That is, communication for electric vehicle charging may be performed through a wireless LAN between an Electric Vehicle Communication Controller (EVCC) and a Supply Equipment Communication Controller (SECC).

In the communication process, the EV 10 may first verify the identity of the charging station 20 to determine whether the charging station 20 is a trusted facility, and may establish a secure channel with the charging station 20 to protect the communication from unauthorized access. This objective may be achieved by conventional Transport Layer Security (TLS). A TLS session may be established by a TLS handshake procedure after establishing an IP-based communication connection.

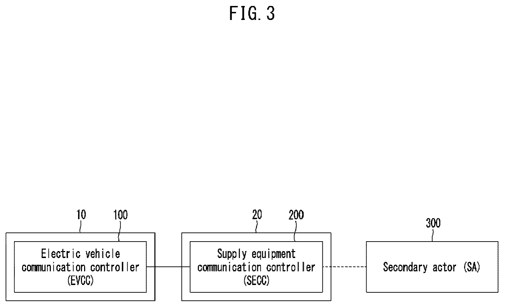

FIG. 3 is a schematic block diagram illustrating a communication relationship among an electric vehicle communication controller (EVCC), a supply equipment communication controller (SECC), and a secondary actor (SA), to which the communication method according to the present disclosure may be applied.

As shown in FIG. 3, the EVCC 100 mounted in the electric vehicle (EV) 10 may communicate with the SECC 200 located in the charging station 10. The SECC 200 may define and use messages according to a protocol or scheme defined for communication between the SECC 200 and the SA 300. The SA 300 may comprise a mobility service provider (eMSP) which provides mobility charging services.

The eMSP refers to a corporation, institution, or a server or entity that performs a corresponding function, with which a customer concludes a contract for all services related to energy delivery to the EV 10. Typically, the eMSP may comprise other actors such as physical suppliers of electricity or electric power suppliers, and may have a close relationship with distribution system operators and meter operators. An OEM or utility may also serve the role of an eMSP. The eMSP may verify an EMAID from a customer received from an EMOCH (e-Mobility operator clearing house), another eMSP, or a physical supplier associated with the customer. To that end, the eMSP may issue an EMAID to a customer, such as an EV owner.

When the SECC 200 does not support TLS session resumption, the EVCC 100 may establish a separate TLS session for each value-added service (VAS) provided or supported by the SECC. Each VAS may be provided through a dedicated port on the SECC. A firewall running on the SECC 200 may be configured to allow access to the dedicated VAS port.

An additional communication channel for the VAS may be opened using a full handshake TLS or a resumed TLS. The resumption may be processed based on a TLS context, i.e., a ticket exchanged during a V2G session. The TLS session resumption may be performed using a pre-configured mechanism.

Meanwhile, when the SECC 200 permits TLS resumption for the VAS, the SECC 200 may be configured to issue a TLS session ticket for each VAS provided to the EVCC 100. In this case, the SECC 200 may provide TCP-level forwarding. Such forwarding may be mapped to a fixed external URI for a local VAS, a proxy server, or a localhost. In the case of end-to-end secure communication via the proxy server, the proxy server may provide a conventional HTTP CONNECT method. When a UDP-based VAS is required, an approach using session resumption may be used together with OpenVPN. In the case of end-to-end secure communication through a fixed external URI, the EVCC 100 and the target VAS server may negotiate a separate secure connection such as a separate TLS session.

When the SECC 200 provides a certificate chain that does not trace to the root certificate of a trusted certificate list, the EVCC 100 may accept the certificate only when the certificate chain is successfully validated using an out-of-band validation mechanism. The out-of-band validation mechanism may comprise a server-based certificate validation protocol (SCVP). When the validation using the corresponding service is not performed, or the result is negative or fails (e.g., due to a connection omission), the EVCC 100 may treat the certificate chain as not validated.

In FIG. 3, the EV 10 refers to a typical automobile owned by an EV owner and may be charged either by wired or wireless means at the charging station 10. An OEM provisioning certificate is installed in the EV 10 during a unique manufacturing process. Upon completion of a vehicle purchase contract and a contract with a mobility operator (MO), a contract certificate may be installed in the EV 10. Additionally, a V2G root certificate may be installed in the EV 10.

Furthermore, an Original Equipment Manufacturer (OEM) server (hereinafter referred to as 'OEM') is a root certificate authority (CA) that issues OEM root certificates and may operate a subordinate certification authority (OEM SubCA). When the EV 10 is manufactured, the OEM may generate an OEM provisioning certificate using the OEM intermediate chain certificate (OEM SubCA cert.) and install the OEM provisioning certificate in the EV 10.

The mobility operator (MO) is a service provider that enters into a contractual relationship with the EV owner regarding charging, authorization, and payment, so that the EV 10 may be charged at the charging station. In order for the EV 10 to receive a charging service at the current charging station 20, the current charging station 20 must belong to the MO or support a roaming scenario. The MO may be operated by an electricity supplier or electricity wholesaler who sells energy. The MO may also act as a root certificate authority (CA) that issues the MO root certificate. The MO certificate chain composed of the MO root certificate and intermediate chain certificates generated by the subordinate CAs may be used when generating the contract certificate. In addition, the MO certificate chain may also be used to verify the contract certificate installed in the EV 10 in either a non-roaming or roaming environment. The MO may also be referred to as an e-mobility service provider (EMSP).

The certificate provisioning service (CPS) provides a provisioning service to a client such as the EV 10 by delivering the contract certificate chain along with cryptographic keys used for certificate transmission and reception when the contract certificate is installed or updated in the EV. The CPS may be equipped with a leaf provisioning certificate (Leaf Prov cert.) and a provisioning intermediate chain certificate (Prov SubCA). When the contract certificate is installed or updated in the EV 10, the CPS provides the provisioning service by supplying the public key of each MO, a Diffie-Hellman (DH) public key, and a mobility authentication identifier (eMAID or EMAID) together with the contract certificate chain, thereby allowing the EV 10 to verify the contract certificate chain and confirm the integrity and trust of the contract certificate.

The contract certificate pool (CCP) temporarily stores a response message to the installation or update during the process of installing or updating the contract certificate in the EV 10. In consideration of the extremely short and strict time limits defined in the ISO 15118 standard for installation and update, the response message may be pre-stored in the CCP and retained until the installation or update is completely finished. Since multiple EVs 10 may be subject to the installation or update of the contract certificate, the response messages may be maintained in the form of a directory after being assigned reference numbers.

The V2G server may act as the root certificate authority with respect to the public key infrastructure (PKI) in the EV charging infrastructure. Therefore, the V2G server serves as the root trust anchor, and all secondary actors 300 regard the V2G root CA as a trusted organization.

The charging station 20 actually performs charging for the EV 10. The charging station 20 may comprise at least one wired charger and/or wireless charging spot. The charging station 20 may be installed at one or more locations in a commercial specialized charging facility. In addition, the charging station 20 may be located in various places such as a parking lot attached to the home of the EV owner, a parking space for EV charging at a gas station, a parking area at a shopping center, or a parking area at a workplace. The charging station 20 may comprise or be referred to as a 'charging point', 'EV charging station', 'electric charging point', 'charging point', 'electronic charging station (ECS)', or 'EV supply equipment (EVSE)'.

The charge service provider (CSP) manages and authenticates the credentials of the EV owner and provides billing and other value-added services to the customer. The CSP may be regarded as a specific type of MO and may also be implemented in an integrated form with the MO. Multiple CSPs may exist, and each CSP may be associated with one or more charging station operators. One or more CSPs and charging station operators may form a charging network. The EV 10 may receive a plug-and-charge (PnC) based charging service from a CSO linked to the CSP associated with the MO under contract, but when charging is to be performed at another CSO, roaming is required. Each CSP may exchange information with another CSP or a CSO in a different network for roaming, and may also exchange information with a clearing house.

The clearing house (CH) handles cooperation matters between at least one MO and at least one CSP. That is, the CH may serve as an intermediary to facilitate approval, billing, and settlement procedures for EV charging service roaming between two clearing parties. When the EV owner intends to charge the EV at a charging station that does not belong to the network of the contracted MO, the CH may support roaming by being connected by a CSO or CSP. In a scenario where roaming is needed, the CH allows the CSO or CSP to enter into a contract with the MO and transmit approval and charging data records (CDRs) to the MO. The CH may be referred to as a 'contract clearing house (CCH)', 'mobility clearing house (MCH)', 'roaming platform', or 'e-mobility clearing house (E-MOCH)'.

The aforementioned 'charging service operator (CSO)', 'certificate provisioning service (CPS)', 'mobility operator (MO)', 'contract clearing house (CCH)', and 'V2G' may appear to refer to individuals or human organizations, but throughout the present specification comprising the claims, these expressions refer to entities implemented in hardware, software, and/or a combination thereof, which are given concise and functional names to enhance readability. In exemplary embodiments, these components may be server devices implemented as a combination of hardware and software, which allow access by other devices through a network such as the Internet. As these components are functionally distinguishable, two or more of them may be housed and executed in a single physical device and may be integrated into a single program. In particular, a single entity may serve both as a CSO and a CSP, and another single entity may serve both as a CPS and a CCP. One or more of the above components may be reorganized to have different appearances and names.

Meanwhile, the EV charging service and the related infrastructure constitute a convergence field involving various industries such as automotive, power grid, energy, transportation, communication, finance, and electronics. Accordingly, standardization efforts have been carried out from various perspectives, and in addition to standardization by multiple international standardization organizations, national-level standardization has also been conducted. Therefore, many similar concept terms exist. In particular, the charging station operator (CSO) shares similarities in role and function with the charge point operator (CPO), and while there may be slight differences in function or nuance, they may essentially refer to the same entity. Furthermore, the charging service provider (CSP) shares at least partial similarities in role and function with the mobility operator (MO), and the terms may be used interchangeably or even confused. Interpretation of the present specification, comprising the claims, should take these practical circumstances into account.

In the EV charging service and related infrastructure, a public key infrastructure (PKI) may be used as the basis for enabling PnC. The PKI provides a framework for identity verification of individuals and devices, activation of secure communication, and assurance of controlled access to resources.

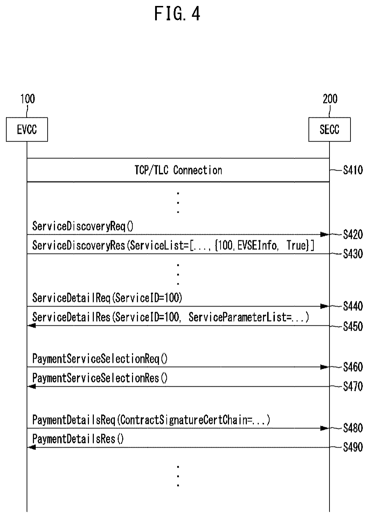

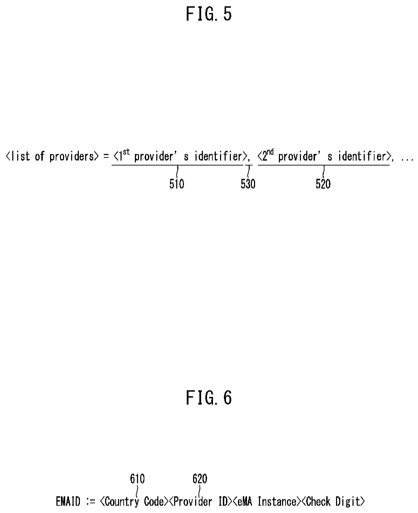

FIG. 4 is a flowchart illustrating a detailed procedure of a communication method for a value-added service (VAS) based on a supported provider list according to exemplary embodiments of the present disclosure. FIG. 5 is an example diagram illustrating the configuration of a provider list applicable to the communication method of FIG. 4. FIG. 6 is a diagram illustrating the configuration of a mobility authentication identifier for explaining the configuration of each provider identifier within the provider list of FIG. 5.

As shown in FIG. 4, while the EVCC 100 and the SECC 200 are in a TCP/TLS-connected state (S410), the EVCC 100 may request a service list from the SECC 200 via a service discovery request message (S420). That is, the SECC 200 may receive a request message for a service list of electric vehicle charging services from the EVCC 100.

Next, the SECC 200 may reply to or provide the EVCC 100 with a list of value-added services (VAS) comprising service identifier information, for example, a service identifier (ServiceID) having the value 100, via a service discovery response (ServiceDiscoveryRes) message (S430). In this specification, such a service identifier having a specific value such as 100 may be referred to as a first service identifier. That is, the EVCC 100 may receive the service list of VAS comprising the first service identifier from the SECC 200.

Here, the service discovery response message may comprise, as service elements, a service name representing the supported provider list, service categories representing information about the electric vehicle supply equipment (EVSE), and the like, along with the information on the first service identifier. The service discovery response message may further comprise a service element indicating free service, such as true or false.

Next, the EVCC 100 may request a parameter for the first service identifier from the SECC 200 via a service detail request (ServiceDetailReq) message (S440). That is, the SECC 200 may receive a request message for the parameter for the first service identifier from the EVCC 100.

Next, the SECC 200 may reply to or provide the EVCC 100 with a number of service parameter sets corresponding to the number of supported providers via a service detail response (ServiceDetailRes) message (S450). That is, the EVCC 100 may receive the service parameter sets corresponding to the number of supported providers from the SECC 200.

The service parameter set may comprise a service parameter list (SPL). As shown in FIG. 5, the service parameter list may be a list of providers and may be in the form of a string or string value in which parameter names are continuously arranged as provider identifiers 510 and 520 that indicate charging service providers. Here, each of the provider identifiers 510 and 520 forming the string form may be separated by a comma 530.

In particular, each provider identifier may be composed of a country code and a provider identifier, which are the first five characters of the mobility authentication identifier (EMAID) in order from the beginning. As shown in FIG. 6, the EMAID is configured by concatenating without spaces a country code 610 expressed in two characters, a provider identifier 620 expressed in three characters, an eMA instance expressed in a predetermined number of characters, numerals, or bits, and a check digit expressed in a predetermined number of characters, numerals, or bits.

Referring again to FIG. 4, the EVCC 100 may transmit a payment service selection request message to the SECC 200 (S460). Then, the EVCC 100 may receive a payment service selection response message from the SECC 200 (S470).

Next, the EVCC 100 may transmit a payment details request message to the SECC 200 (S480). Then, the EVCC 100 may receive a payment details response message from the SECC 200 (S490).

Here, the EVCC 100 may transmit a contract certificate chain having a mobility account identifier (EMAID) supported by the provider list of the SECC 200 to the SECC 200 via the payment details request message. The contract certificate chain may comprise a contract signature certificate chain (ContractSignatureCertChain). The contract signature certificate chain comprises a contract certificate and may optionally comprise a subordinate certificate.

Such PnC message elements may be provided only when a parameter is required or when the normal operation is changed. The provided message elements may be handled to overwrite the corresponding existing information or other information.

As such, when the SECC 200 supports the SPL function, a dedicated VAS may be provided in the service discovery response (ServiceDiscoveryRes) message. In addition, when the EV 10 intends to use the SPL function, the EV 10 may transmit a service detail request (ServiceDetailReq) message with the service identifier assigned to the dedicated VAS described above. Then, the SECC 200 may reply to the EV 10 with a parameter indicating the supported provider list via the service detail response (ServiceDetailRes) message. The number of supported providers contained in the SPL may be unlimited.

The EV 10 may check whether a contract certificate for one of the supported providers exists. When the contract certificate of a supported provider exists, the EV 10 may grant authorization for the corresponding supported provider using the supported contract certificate. On the other hand, when no supported contract certificate exists, the EV 10 may leave the charging station 20 or repeatedly attempt to access the PnC charging service.

According to the above configuration, when selecting a PnC charging service for a legacy charger, the EV 10 does not need to select a specific VAS to select an appropriate contract certificate issued by a mobility service provider.

In addition, according to the above configuration, the present disclosure may contribute to introducing a dedicated value-added service (VAS) that provides supported provider list information for a charging service to the electric vehicle. The supported provider list for such a dedicated VAS may be transmitted using a service parameter element of the service detail response (ServiceDetailRes) message. In this case, additional VAS communication may not be executed.

An example of a service definition for the above-described dedicated VAS is shown in Table 1 below.

**[Table 1]**

| Service ID | Service Name | Service Category | Remarks |
|---|---|---|---|
| 0 | | | Reserved by ISO/IEC |
| 1 | DC_AC_Charging | EV Charging | All charging services |
| 2 | Certificate | Contract Certificate | Updatable/installable service |
| 3 | Internet_Access | Internet | General protocol |
| 4 | UseCase_Information | EVSE Information | Use-case specific information exchange |
| 100 | Supported_Providers_List | EVSE Information | List of providers authorized for PnC |
| 60001 - 65535 | | | Reserved for implementation-specific purposes |

As shown in Table 1, the SECC may provide a list of supported providers for the electric vehicle's PnC authorization for a legacy charger for a charging service to the electric vehicle via a message having a service element in which the service identifier is set to 100 and the service name is set to "List of providers". In the present exemplary embodiments, a case in which 100 is selected as the service identifier is illustrated. However, the present disclosure is not limited to such a configuration, and the service identifier may be configured to use another value other than 100, comprising values smaller than 100 or greater than 100, as long as the value does not overlap with other service identifiers.

In addition, an example of the service parameter definition for the above-described dedicated VAS is shown in Table 2 below. That is, for the service identifier 100 described in Table 1, the following parameter sets may be added.

**[Table 2]**

| ParameterSetID | ParameterName="Providers" | Decription |
|---|---|---|
| 1 | stringValue=<list of providers> | list of providers |
| 2 | stringValue=<list of providers> | list of providers |
| ... | ... | ... |

As shown in Table 2, multiple parameter sets may be distinguished by parameter set identifiers (parameterSetID), for example, 1, 2, and so on. The parameter name of each parameter set may be referred to as "providers" or "supported providers", and the provider list may be set as a string value composed of provider identifiers of the supported providers. For example, the provider list may have the same configuration as described above with reference to FIG. 5 and FIG. 6. That is, the provider list may be configured as "KRHMC,FREDF,DESHL,USCHP,NLABB", and the like. In one example, "KR" in "KRHMC" may represent the country code for the Republic of Korea, and "HMC" may represent the provider identifier of Hyundai Motor Company. Here, the country code and the provider identifier may be the same as those comprised in the mobility account identifier (EMAID). The provider list may comprise 255 or more provider identifiers, and adjacent provider identifiers may be separated by commas.

In relation to the above-described provider list, the SECC may perform a process (for example, a parameter set generation process) to indicate all supported providers in a single list, that is, a single parameter set, or may perform the process to indicate all providers divided into multiple lists, that is, multiple parameter sets, based on a selected criterion.

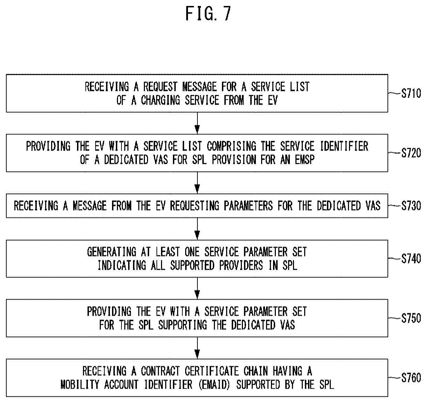

FIG. 7 is a flowchart illustrating a communication method according to other exemplary embodiments of the present disclosure.

As shown in FIG. 7, the SECC may receive a request message for a service list of a charging service from the EV (S710). The request message may be a service discovery request message used in the EV charging service procedure.

Next, the SECC may provide the EV with a service list comprising the service identifier of a dedicated VAS for SPL provision for an EMSP (S720). That is, the SECC may provide the EVCC with a list of value-added services (VAS) comprising a service identifier (referred to as a 'first service identifier') for the supported provider list for a dedicated VAS via a service discovery response message.

Next, the SECC may receive a message from the EV requesting parameters for the dedicated VAS, that is, parameters for the first service identifier (S730). The message requesting the parameter may be a service detail request message used in the EV charging service procedure.

Next, the SECC may generate at least one service parameter set that indicates all supported providers in the supported provider list (SPL) (S740).

Next, the SECC may provide the EV with a service parameter set for the SPL supporting the dedicated VAS (S750). The service parameter set may be referred to as a service parameter set. The SECC may send at least one service parameter set to the EVCC via a service detail response message.

Next, the SECC may receive a contract certificate chain having a mobility account identifier (EMAID) supported by the SPL from the EV (S760). The SECC may receive the contract certificate chain from the EVCC via a payment details request (PaymentDetailsReq) message.

As described above, when the EVCC receives a service detail response (ServiceDetailRes) message from the SECC with the first service identifier, for example, "ServiceID=100", the EVCC may determine the contract certificate supported by the SECC. When the contract certificate is supported by the SECC, the above-described procedures (S710 through S760) may proceed. On the other hand, when the contract certificate is not supported by the SECC, the EVCC may terminate the establishment operation of the PnC charging service.

As such, the EV may check a list of authorization setup response (AuthorizationSetupRes) messages for the mobility service providers (EMSPs). The EV may also check PnC compatibility with the charger and appropriately select a contract certificate issued by a preferred EMSP.

According to the above configuration, a supported provider list (SPL) supporting a value-added service (VAS) may be provided while maintaining interoperability with a legacy charger or legacy device that does not support the SPL function. That is, the present disclosure may support the functions related to the above-described supported provider list without breaking interoperability with an existing legacy charger.

In addition, according to the above configuration, a new scheme for delivering supported provider list information to the EV as a value-added service may be provided. That is, a value-added service based on the supported provider list may be effectively implemented by using service parameter elements of the service detail response (ServiceDetailRes) message used in the existing EV charging service procedure.

Furthermore, according to the present disclosure, additional value-added service communication required to be executed subsequently for the supported provider list-based value-added service may not be required. In this case, the electric vehicle may not be required to make a selection for a value-added service during the service selection process, thereby maintaining a user-centered service and providing user convenience.

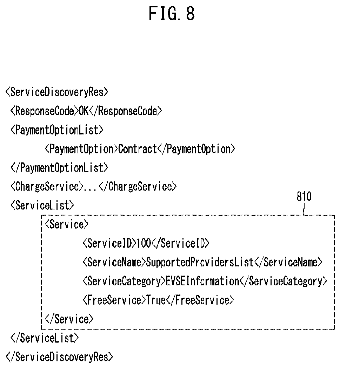

FIG. 8 is an example diagram illustrating the detailed items of a service list within a message for implementing a value-added service applicable to the communication method of FIG. 7.

As shown in FIG. 8, a service discovery response (ServiceDiscoveryRes) message may comprise service parameter elements 810 for a dedicated VAS in a service list.

The service parameter elements 810 may comprise elements for a service identifier, a service name, a service category, and a free service.

The service identifier (ServiceID) element may be set to a predefined value, for example, 100. The service name (ServiceName) element may be set to "SupportedProvidersList". The service category (ServiceCategory) element may be set to "EVSEInformation", which represents electric vehicle supply equipment information. The free service (FreeService) element may be set to "true" or "false" to indicate whether the service is free of charge.

According to the present exemplary embodiments, the SECC may provide a supported provider list to the electric vehicle via the service name (ServiceName) item in the service discovery response message for a specific service identifier such as 100 or the first service identifier.

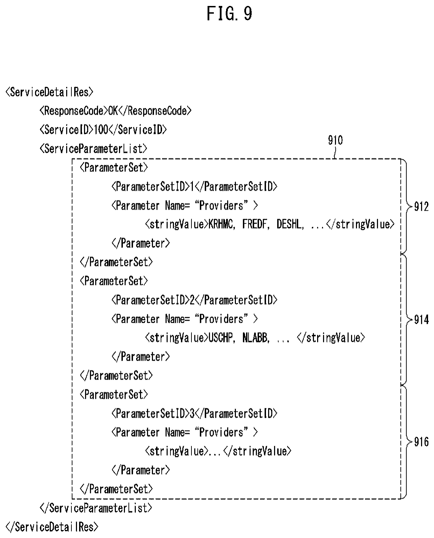

FIG. 9 is an example diagram illustrating the interoperability effect of the communication method of FIG. 7.

As shown in FIG. 9, a service detail response (ServiceDetailRes) message may comprise a service parameter list 910 for a dedicated VAS corresponding to a first provider identifier. The SECC may provide various manufacturers/providers or their service parameter sets (briefly referred to as "parameter sets") by service type to the electric vehicle through the service parameter list 910. For example, the service parameter list 910 may comprise a first parameter set 912, a second parameter set 914, and a third parameter set 916.

In the first parameter set 912, the parameter set identifier (ParameterSetID) element may be set to 1, and the parameter name (Parameter Name) indicated as "Providers" may be set to a string value of "KRHMC,FREDF,DESHL,...".

In the second parameter set 914, the parameter set identifier (ParameterSetID) element may be set to 2, and the parameter name (Parameter Name) indicated as "Providers" may be set to a string value of "USCHP,NLABB,...".

In the third parameter set 916, the parameter set identifier (ParameterSetID) element may be set to 3, and the parameter name (Parameter Name) indicated as "Providers" may be set to a string value composed of other provider identifiers, each consisting of five characters and separated by commas.

According to the present exemplary embodiments, the SECC may be configured to select a parameter set generation procedure that maintains a relatively smaller number of providers in a single parameter set by using multiple parameter sets, or to generate at least one parameter set. This configuration allows interoperability with devices defined in the ISO 15118-2 standard to be maintained without modifying the schema or requirements.

Meanwhile, in the exemplary embodiments of the present disclosure, when both the EVCC and the SECC support the value-added service for the supported provider list, messages comprising the relevant item may be exchanged between the EVCC and the SECC.

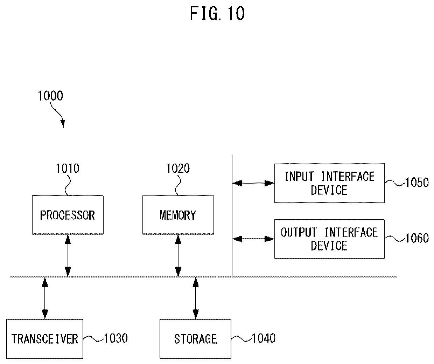

FIG. 10 is a schematic block diagram illustrating a generalized hardware configuration of a device that provides a supported providers list (SPL) for a value-added service (VAS) according to other exemplary embodiments of the present disclosure.

As shown in FIG. 10, the device 1000 may be mounted on or coupled to an electric vehicle (EV) and may be at least a part of the function unit or component of the electric vehicle communication controller (EVCC). In another implementation, the device 1000 may be mounted on or coupled to electric vehicle supply equipment (EVSE) and may be at least a part of the function unit or component of the supply equipment communication controller (SECC).

The device 1000 may comprise a processor 1010 and, depending on the implementation, may further comprise a memory 1020, a transceiver 1030, a storage 1040, an input interface device 1050, and an output interface device 1060. At least some of the components of the device 1000, comprising the processor 1010, may be connected to each other via a bus, allowing signals and data to be exchanged.

The processor 1010 may execute program instructions or software modules stored in the memory 1020. The memory 1020 may store program instructions or software modules. The memory 1020 may comprise volatile memory such as RAM (random access memory) and non-volatile memory such as ROM (read only memory). The memory 1020 may load program instructions stored in the storage 1040 and provide them to the processor 1010 so that the processor 1010 may execute them.

The processor 1010 may execute the program instructions stored in the memory 1020 and/or the storage 1040. The processor 1010 may comprise at least one central processing unit (CPU), graphics processing unit (GPU), or another processor capable of performing the communication method according to the present disclosure.

The storage 1040 may be a recording medium suitable for storing program instructions and data and may comprise, for example, magnetic media such as a hard disk, floppy disk, and magnetic tape, optical media such as a CD-ROM (compact disc read only memory) and DVD (digital video disc), magneto-optical media such as a floptical disk, and semiconductor memory such as flash memory, EPROM (erasable programmable ROM), or SSDs based thereon.

The operation of the method according to the exemplary embodiments of the present disclosure may be implemented as a computer-readable program or code stored in a computer-readable recording medium. A computer-readable recording medium comprises all types of recording devices in which information readable by a computer system is stored. The computer-readable recording medium may also comprise computer-readable programs or codes that are stored and executed in a distributed manner across computer systems connected via a network. The distributed manner may comprise a secured distributed architecture using blockchain.

The computer-readable recording medium may also comprise hardware devices specifically configured to store and execute program instructions, such as ROM, RAM, and flash memory. The program instructions may comprise machine code created by a compiler as well as high-level language code executable by a computer using an interpreter or the like. The program instructions may also comprise, in a broad sense, artificial intelligence or artificial neural networks.

Some aspects of the present disclosure are described in the context of devices, but may also represent corresponding method descriptions, where blocks or components correspond to method steps or features of method steps. Similarly, aspects described in the context of methods may also be expressed as corresponding blocks, items, or features of a device. Some or all of the method steps may be performed by (or using) hardware devices such as a microprocessor, programmable computer, or electronic circuit. In some exemplary embodiments, at least one of the most critical method steps may be performed by such a device.

In exemplary embodiments, a programmable logic device such as a field-programmable gate array (FPGA) may be used to perform some or all of the functions of the methods described herein. In exemplary embodiments, the FPGA may operate together with a microprocessor to perform one of the methods described herein. In general, it is preferable that the methods be performed by a hardware device.

While the present disclosure has been described with reference to preferred embodiments, it will be understood by those skilled in the art that various modifications and changes may be made without departing from the spirit and scope of the invention as defined in the appended claims.

## Claims

1. A communication method for a value-added service (VAS) by a supply equipment communication controller (SECC) in V2G (vehicle-to-grid) communication, the communication method comprising:
receiving, from an electric vehicle (EV), a request message for a service list of a charging service;
providing, to the EV, a service list comprising a first service identifier of a dedicated VAS for providing a supported providers list for an e-mobility service provider (EMSP);
receiving, from the EV, a request message for parameters of the dedicated VAS; and
providing, to the EV, at least one service parameter set for the supported providers list supporting the dedicated VAS.

2. The communication method of claim 1, wherein the providing of the service list comprising the first service identifier to the EV comprises:
transmitting a service discovery response message to the EV, and
wherein the service discovery response message comprises service elements comprising the first service identifier, a service name representing the supported providers list, and a service category representing information of electric vehicle supply equipment (EVSE).

3. The communication method of claim 2, wherein the receiving of the request message for parameters of the dedicated VAS from the EV comprises:
receiving a service detail request message from the EV, and
wherein the service discovery response message further comprises a service element indicating whether the service is free.

4. The communication method of claim 1, wherein the providing of the at least one service parameter set to the EV comprises:
transmitting a service detail response message to the EV in response to the service detail request message, and
wherein the at least one service parameter set comprises a string value of provider identifiers set as a parameter name of "providers", the provider identifiers being separated by commas.

5. The communication method of claim 4, wherein each of the provider identifiers comprises a country code and a provider ID from a mobility authentication identifier (EMAID).

6. The communication method of claim 1, wherein the supported providers list comprises a list of providers that support PnC (plug and charge / park and charge) authorization.

7. The communication method of claim 1, further comprising:
generating a single service parameter set listing all providers in the supported providers list; or
generating multiple service parameter sets classifying and listing all providers in the supported providers list based on a predefined criterion.

8. The communication method of claim 1, further comprising:
receiving, from the EV via a payment details request message, a contract certificate chain having a mobility authentication identifier (EMAID) supported by the supported providers list.

9. A device for a value-added service (VAS) in V2G (vehicle-to-grid) communication, comprising:
a processor; and
at least one instruction in the processor,
wherein the processor is configured to:
receive, from an electric vehicle (EV), a request message for a service list of a charging service;
provide, to the EV, a service list comprising a first service identifier of a dedicated VAS for providing a supported providers list for an e-mobility service provider (EMSP);
receive, from the EV, a request message for parameters of the dedicated VAS; and
provide, to the EV, at least one service parameter set for the supported providers list supporting the dedicated VAS.

10. The device of claim 9, wherein the providing of the service list comprising the first service identifier to the EV comprises:
transmitting a service discovery response message to the EV, and
wherein the service discovery response message comprises service elements comprising the first service identifier, a service name representing the supported providers list, and a service category representing information of electric vehicle supply equipment (EVSE).

11. The device of claim 10, wherein the receiving of the request for parameters of the dedicated VAS from the EV comprises:
receiving a service detail request message from the EV, and
wherein the service discovery response message further comprises a service element indicating whether the service is free.

12. The device of claim 9, wherein the providing of the at least one service parameter set to the EV comprises:
transmitting a service detail response message to the EV in response to the service detail request message, and
wherein the at least one service parameter set comprises a string value of provider identifiers set as a parameter name of "providers", the provider identifiers being separated by commas.

13. The device of claim 12, wherein each of the provider identifiers comprises a country code and a provider ID from the first five characters of a mobility authentication identifier (EMAID), and
wherein the supported providers list comprises a list of providers that support PnC (plug and charge / park and charge) authorization.

14. The device of claim 9, wherein the processor is further configured to:
generate a single service parameter set listing all providers in the supported providers list, or
generate multiple service parameter sets classifying and listing all providers in the supported providers list based on a predefined criterion.

15. The device of claim 9, wherein the processor is further configured to:
receive, from the EV via a payment details request message, a contract certificate chain having a mobility authentication identifier (EMAID) supported by the supported providers list.

16. A communication method for a value-added service (VAS) by an electric vehicle communication controller (EVCC) in V2G (vehicle-to-grid) communication, the communication method comprising:
requesting, to a supply equipment communication controller (SECC), a service list of an EV charging service;
receiving, from the SECC, a service list comprising a first service identifier of a dedicated VAS for providing a supported providers list for an e-mobility service provider (EMSP);
requesting, to the SECC, parameters of the dedicated VAS; and
receiving, from the SECC, at least one service parameter set for the supported providers list supporting the dedicated VAS.

17. The communication method of claim 16, wherein the receiving of the service list comprising the first service identifier comprises:
receiving a service discovery response message from the SECC, and
wherein the service discovery response message comprises service elements comprising the first service identifier, a service name representing the supported providers list, and a service category representing information of electric vehicle supply equipment (EVSE).

18. The communication method of claim 17, wherein the requesting of the parameters of the dedicated VAS comprises
transmitting a service detail request message to the SECC,
wherein the receiving of the at least one service parameter set comprises receiving a service detail response message from the SECC in response to the service detail request message, and
wherein the service discovery response message further comprises a service element indicating that the service is free.

19. The communication method of claim 16, wherein at least one of the at least one service parameter set comprises a string value of provider identifiers set as a parameter name of providers, the provider identifiers being separated by commas,
wherein each of the provider identifiers comprises a country code and a provider ID from the first five characters of a mobility authentication identifier (EMAID).

20. The communication method of claim 16, further comprising:
transmitting, to the SECC via a payment details request message, a contract certificate chain having a mobility authentication identifier (EMAID) supported by the supported providers list.
